# FASCICULE DE BREVET EUROPEEN

(11) **EP 3 582 977 B1**
(45) Date de publication et mention de la délivrance du brevet: **31.03.2021**
(21) Numéro de dépôt: 18707952.0
(22) Date de dépôt: 14.02.2018
(51) Int. Cl.: B60C 1/00, C08L 9/06, C08K 3/04

(54) **COMPOSITION DE CAOUTCHOUC PRÉSENTANT DES PROPRIÉTÉS AMÉLIORÉES À CRU ET À CUIT**
KAUTSCHUKZUSAMMENSETZUNG MIT VERBESSERTEN EIGENSCHAFTEN IM ROHZUSTAND UND IM GEKOCHTEN ZUSTAND
RUBBER COMPOSITION HAVING IMPROVED PROPERTIES IN THE RAW STATE AND IN THE COOKED STATE

(30) Priorité: 20.02.2017 FR 1751327
(43) Date de publication de la demande: 25.12.2019
(73) Titulaire: Compagnie Générale des Etablissements Michelin, 63000 Clermont-Ferrand (FR)
(72) Inventeur: BELIN, Lionel, 63040 Clermont-Ferrand Cedex 9 (FR); DALLIERE, Claire, 63040 Clermont-Ferrand Cedex 9 (FR); FILIOL, Eve-Anne, 63040 Clermont-Ferrand Cedex 9 (FR); JORDERY, Eric, 63040 Clermont-Ferrand Cedex 9 (FR)
(74) Mandataire: Louret, Sylvain
(86) Numéro de dépôt international: PCT/FR2018/050356
(87) Numéro de publication internationale: WO 2018/150136

(56) Documents cités:
- EP-A1- 1 074 403
- WO-A1-2011/147710

## Description

La présente invention est relative à des compositions de caoutchouc destinées notamment à la fabrication de pneumatiques ou de produits finis et semi-finis pour pneumatiques.

Depuis que la nécessité de protéger l'environnement est devenue une priorité, il est souhaitable de réduire la quantité de matière utilisée au sein d'un pneumatique par exemple en réduisant la quantité de matières des produits finis et semi-finis qui le composent. Toutefois, cette réduction de matière ne doit en aucun cas pénaliser les propriétés du pneumatique.

Des solutions en ce sens ont été apportées, par exemple en modifiant les profils de pneumatiques, ou bien en modifiant les combinaisons ou les dispositions de produits finis ou semi-finis au sein du pneumatique (WO 2004/018236, FR 2 924 979).

Or, il demeure toujours intéressant de réduire davantage la quantité de matière au sein d'un pneumatique tout en conservant ses propriétés.

La Demanderesse a découvert qu'il est possible de répondre à ce besoin en utilisant des compositions de caoutchouc spécifiques. En particulier, la Demanderesse s'est rendu compte qu'il est possible de diminuer les épaisseurs des produits finis ou semi-finis pour pneumatiques, grâce à des compositions présentant des propriétés mécaniques améliorées, à la fois à cru pour pouvoir produire les produits semi-finis dans des conditions industrielles satisfaisantes, et à cuit afin de conserver les propriétés globales du produit fini ou semi-fini, et plus généralement celles du pneumatique.

Ainsi, la présente invention a notamment pour objet une composition de caoutchouc à base d'au moins :
- une matrice élastomérique comprenant au plus 70 pce d'un polyisoprène et au moins 30 pce d'un copolymère de butadiène-styrène,
   le copolymère de butadiène-styrène présentant un taux de motifs styrène compris entre 20 et 40% en poids par rapport au poids total du copolymère butadiène-styrène, un taux de motif butadiénique 1-4 trans supérieur à 65% en poids par rapport au poids total des motifs butadiéniques, un taux d'unité vinyl inférieur à 8% en poids par rapport au poids total des motifs butadiéniques, et une température de transition vitreuse comprise entre -60 °C et -35 °C,
- de 35 à 75 pce d'un noir de carbone présentant une surface spécifique BET comprise entre 90 et 100 m²/g et un indice d'absorption COAN compris entre 90 et 100 ml/100g,
- un système de réticulation.

La présente invention a également pour objet un article de caoutchouc fini ou semi-fini comportant une composition de caoutchouc selon l'invention, ainsi qu'un pneumatique comprenant au moins un article fini ou semi-fini selon l'invention, ou au moins une composition selon l'invention.

### I- DÉFINITIONS

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé "minoritaire" est un composé qui ne représente pas la fraction massique la plus grande parmi les composés du même type, par exemple moins de 50%, 40%, 30%, 20%, 10%, voire moins.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### II- DESCRIPTION DE L'INVENTION

### II-1 Matrice élastomérique

Par élastomère (ou « caoutchouc », les deux termes étant considérés comme synonymes) du type "diénique", on rappelle ici que doit être compris de manière connue un (on entend un ou plusieurs) élastomère issu au moins en partie (*i.e.,* un homopolymère ou un copolymère) de monomères diènes (monomères porteurs de deux doubles liaisons carbone-carbone, conjuguées ou non).

De manière générale, les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :
a) tout homopolymère obtenu par polymérisation d'un monomère diène conjugué ayant de 4 à 12 atomes de carbone;
b) tout copolymère obtenu par copolymérisation d'un ou plusieurs diènes conjugués entre eux ou avec un ou plusieurs composés vinyle aromatique ayant de 8 à 20 atomes de carbone;
c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
d) un copolymère d'isobutène et d'isoprène (caoutchouc butyle), ainsi que les versions halogénées, en particulier chlorées ou bromées, de ce type de copolymère.

L'homme du métier du pneumatique comprendra que la présente invention est de mise en œuvre avec des élastomères diéniques essentiellement insaturés, en particulier du type (a) et (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 20% et 99% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6,013,718 et WO 2008/141702), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909 ou US 6,503,973, WO 2009/000750 et WO 2009/000752). Comme autres exemples d'élastomères fonctionnalisés, on peut citer également des élastomères (tels que SBR, BR, NR ou IR) du type époxydés.

Selon l'invention, la matrice élastomérique comprenant au plus 70 pce d'un polyisoprène et au moins 30 pce d'un copolymère de butadiène-styrène, le copolymère de butadiène-styrène présentant un taux de motifs styrène compris entre 20 et 40 % en poids par rapport au poids total du copolymère butadiène-styrène, un taux de motif butadiénique 1-4 trans supérieur à 65% en poids par rapport au poids total des motifs butadiéniques, un taux d'unité vinyl inférieur à 8% en poids par rapport au poids total des motifs butadiéniques, et une température de transition vitreuse comprise entre -60 °C et -35 °C.

La température de transition vitreuse Tg est mesurée de manière connue par DSC (Differential Scanning Calorimetry), selon la norme ASTM D3418 (1999).

Par "polyisoprène", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). De préférence, le polyisoprène est choisi dans le groupe constitué par du caoutchouc naturel, un polyisoprène de synthèse et un de leurs mélanges, de préférence encore, le polyisoprène comprend majoritairement, et encore plus avantageusement exclusivement du caoutchouc naturel.

De préférence, le polyisoprène comporte un taux massique de liaisons cis 1,4 d'au moins 90%, plus préférentiellement d'au moins 98% par rapport à la masse du polyisoprène.

Selon l'invention, le copolymère de butadiène-styrène présente avantageusement l'une quelconque, de préférence deux, de préférence encore trois, et plus préférentiellement la totalité des caractéristiques suivantes :
- un taux de motifs styrène compris entre 20 et 30% en poids par rapport au poids total du copolymère butadiène-styrène,
- un taux de motif butadiénique 1-4 trans compris entre 65 et 90%, de préférence entre 70 et 90%, en poids par rapport au poids total des motifs butadiéniques,
- un taux d'unité vinyl compris entre 2 et 8% en poids par rapport au poids total des motifs butadiéniques,
- une température de transition vitreuse comprise entre -60 °C et -40 °C.

Selon l'invention, quel que soit la nature du copolymère de butadiène-styrène selon l'invention, il est avantageusement un copolymère de butadiène-styrène préparé en solution ("SSBR").

De manière avantageuse, la matrice élastomérique comprend de 30 à 70 pce du polyisoprène et de 30 à 70 pce du copolymère butadiène-styrène. De préférence encore, la matrice élastomérique comprend de 30 à 60 pce du polyisoprène et de 40 à 70 pce du copolymère butadiène-styrène. Encore plus préférentiellement, la matrice élastomérique comprend de 30 à 50 pce du polyisoprène et de 50 à 70 pce du copolymère butadiène-styrène.

Bien que cela ne soit pas nécessaire pour la mise en œuvre de la présente invention, la matrice élastomérique de la composition selon l'invention peut contenir de manière minoritaire un ou plusieurs élastomères diéniques différents (appelé ci-après « autre élastomère diénique » dans un souci de simplification de rédaction) du polyisoprène et du copolymère butadiène-styrène utilisés dans le cadre de la présente invention. Par exemple, l'autre élastomère diénique peut être choisi, par exemple, dans le groupe des élastomères diéniques fortement insaturés constitué par les polybutadiènes (en abrégé "BR"), les copolymères de butadiène, les copolymères d'isoprène et les mélanges de ces élastomères. De tels copolymères peuvent par exemple être choisis dans le groupe constitué par les copolymères de butadiène-styrène (SBR) différents du copolymère butadiène-styrène utilisé dans le cadre de la présente invention, les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés. De préférence, la matrice élastomérique ne contient pas d'autre élastomère diénique ou en contient moins de 20 pce, de préférence moins de 10 pce, de préférence encore moins de 5 pce.

La matrice élastomérique peut également contenir de manière minoritaire tout type d'élastomère synthétique autre que diénique, voire avec des polymères autres que des élastomères, par exemple des polymères thermoplastiques. De préférence, matrice élastomérique ne contient pas d'élastomère synthétique autre que diénique ni de polymère autre que des élastomères ou en contient moins de 10 pce, de préférence moins de 5 pce.

### II-2 Charge renforçante

La composition de caoutchouc comprend de 35 à 75 pce d'un noir de carbone présentant une surface spécifique BET comprise entre 90 et 100 m²/g et un indice d'absorption COAN compris entre 90 et 100 ml/100g.

Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La surface spécifique BET des noirs de carbone est mesurée selon la norme D6556-10 [méthode multipoints (au minimum 5 points) - gaz : azote - domaine de pression relative P/P0 : 0.1 à 0.3].

Le COAN, ou indice d'absorption d'huile par des échantillons comprimés (« Compressed Oil Absorption Number » en anglais), des noirs de carbone, est mesuré selon la norme ASTM D3493-16.

De préférence, le taux du noir de carbone est compris dans un domaine allant de 40 à 70 pce, de préférence de 45 à 65 pce, de préférence encore de 50 à 65 pce.

Bien que cela ne soit pas nécessaire pour la mise en œuvre de la présente invention, la composition de caoutchouc selon l'invention peut contenir de manière minoritaire une ou plusieurs charges renforçantes différentes du noir de carbone spécifiquement nécessaire à l'invention (c'est-à-dire une charge renforçante autre que le noir de carbone présentant une surface spécifique BET comprise entre 90 et 100 m²/g et un indice d'absorption COAN compris entre 90 et 100 ml/100g). Cette ou ces charges renforçantes différentes sont appelées ci-après « autre charge renforçante » dans un souci de simplification de rédaction. L'autre charge renforçante peut par exemple comprendre un noir de carbone différent du noir de carbone utilisé dans le cadre de la présente invention, une charge organique autre que le noir de carbone, une charge inorganique ou le mélange d'au moins deux de ces charges. A titre d'exemple de noir de carbone différent du noir de carbone utilisé dans le cadre de la présente invention, on peut citer les noirs de carbone renforçants des séries 100, 200, ou les noirs de série 500, 600 ou 700 (grades ASTM), comme par exemple les noirs N115, N134, N234, N550, N683, N772).

Les noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. En d'autres termes, sans agent de couplage, la charge inorganique ne permet pas de renforcer, ou pas suffisamment, la composition et n'est par conséquent pas comprise dans la définition de « charge inorganique renforçante ».

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

De préférence, la composition selon l'invention ne contient pas d'autre charge renforçante ou en contient moins de 20 pce, de préférence moins de 10 pce, de préférence encore moins de 5 pce.

### II-3 Système de réticulation

Le système de réticulation peut être à base de soufre moléculaire et/ou de donneurs de soufre et/ou de peroxyde, bien connus de l'homme du métier.

Parmi les peroxydes, bien connus de l'homme de l'art, il est préférable d'utiliser pour l'invention un peroxyde choisi dans la famille des peroxydes organiques. De préférence, le peroxyde est un peroxyde organique choisi dans le groupe comprenant ou constitué par le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et leurs mélanges.

Il existe dans le commerce divers produits conditionnés, connus sous leurs marques de fabrique; on peut citer:-le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Préférentiellement, la quantité de peroxyde à utiliser pour les besoins de l'invention est inférieure ou égale à 3 pce. De préférence, la quantité de peroxyde dans la composition est comprise dans un domaine allant de 0,1 à 3 pce. Plus préférentiellement, la quantité de peroxyde dans la composition est comprise dans un domaine allant de 0,2 à 2,5 pce, de préférence de 0,25 à 1,8 pce.

Le système de réticulation est préférentiellement un système de vulcanisation à base de soufre moléculaire (et/ou d'un agent donneur de soufre). Très avantageusement le système de vulcanisation est accompagné d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

De manière particulièrement avantageuse, la composition selon l'invention comprend un système de vulcanisation à base de soufre moléculaire et/ou de donneurs de soufre, et un agent anti-réversion.

Le soufre est utilisé à un taux préférentiel compris entre 1 et 10 pce, de préférence entre 1 et 5 pce, de préférence encore être 1 et 3 pce. L'accélérateur primaire de vulcanisation peut être utilisé à un taux préférentiel compris entre 0,2 et 5 pce, plus préférentiellement compris entre 0,5 et 3 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### II-4 Agent anti-réversion

Lorsque le système de réticulation de la composition selon l'invention est un système de vulcanisation à base de soufre et/ou d'un agent donneur de soufre, la composition selon l'invention comprend en outre très préférentiellement un agent anti-réversion bien connu de l'homme du métier pour ses capacités à limiter, voire supprimer, la destruction ou le raccourcissement des ponts de réticulations polysulfurés. En d'autres termes, lorsque le système de réticulation n'est pas un système de vulcanisation (par exemple lorsque le système de réticulation est à base de peroxyde, la présence de l'agent anti-réversion n'est pas obligatoire.

L'agent anti-réversion peut être tout agent anti-réversion connu de l'homme du métier. Il peut s'agir par exemple d'un sel de thiouronium ou un analogue de ce sel décrit dans le document WO 2003/106195 ou encore d'un composé bismaleimide décrit dans le document EP 0 823 453.

De manière avantageuse, l'agent anti-réversion est un dérivé de citraconimide formule (I) 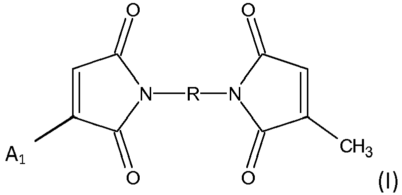 dans laquelle,
R est un radical hydrocarboné comprenant de 1 à 25 atomes de carbone et éventuellement un ou plusieurs hétéroatomes choisis dans le groupe constitué par O, N et S, et
A₁ représente un atome d'hydrogène ou un groupe méthyle.

De préférence, R est choisi dans le groupe constitué par les alkylènes ayant de 1 à 20 atomes de carbone, les cycloalkylènes ayant de 6 à 24 atomes de carbone, les arylènes ayant de 6 à 18 atomes de carbone et les aralkylènes ayant de 7 à 25 atomes de carbone. Par exemple, R peut être choisi dans le groupe constitué par les alkylène ayant 1 à 15, de préférence 1 à 10 atomes de carbone, les cycloalkylènes ayant de 6 à 20, de préférence de 6 à 15 atomes de carbone, les arylènes ayant de 6 à 15, de préférence de 6 à 10 atomes de carbone, et les aralkylènes ayant de 7 à 20, de préférence de 7 à 15 atomes de carbone. De manière particulièrement avantageuse, R est un arylènes ayant de 6 à 15, de préférence de 6 à 10 atomes de carbone.

De préférence, A₁ est un groupe méthyle. Dans ce cas l'agent anti-réversion peut avantageusement être choisi dans le groupe constitué par le 1,3-bis(citraconimidométhyl)benzène le 1,3-bis(citraconimidométhyl)-2-methylbenzène, le 1,3-bis(citraconimidométhyl)-4-méthyl benzène, le 1,3-bis(citraconimidométhyl)-3-méthylbenzène, le 1,3-bis(citraconimidométhyl)-2,4-diméthylbenzène, le 1,3-bis(citraconimidométhyl)-2-méthylhexane, le 1,3-bis(citraconimidométhyl)-dodecane, le 1,3-bis(citraconimidométhyl)-decane, le 1,3-bis(citraconimidométhyl)-octane, le 1,3-bis(citraconimidométhyl)-hexane , le 1,3-bis(citraconimidométhyl)-pentane, et les mélanges de ces composés. De préférence encore, l'agent anti-réversion est le 1,3-bis(citraconimidométhyl)benzène. Ce composé répond à la formule particulière suivante :

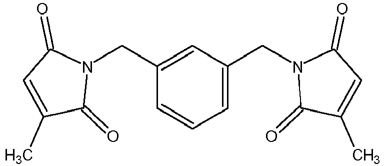

Ce composé est disponible dans le commerce sous la dénomination "Perkalink 900" (ou DP900) de la société Lanxess.

A₁ peut également être un atome d'hydrogène. Dans ce cas, l'agent anti-réversion peut par exemple être choisi dans le groupe constitué par le N-(citraconimido-m-phényl) maléimide, le N-(citraconimido-p-phényl) maléimide, le N-(citraconimido-o-phényl) maléimide, le N-(3-citraconimido-4,6-diméthyl-phényl) maléimide, le N-(3-citraconimido-4-méthyl-phényl) maléimide, le N-(3-citraconimido-6-méthyl-phényl) maléimide, le N-(3-citraconimido-2-méthyl-phényl) maléimide, le N-(1'-citraconimido-4,4'-méthylène-biphényl) maléimide, le N-[2-(méthylène-citraconimido)-phényl]-méthylène-maléimide, le N-[3-(méthylène-citraconimido)-phényl]-méthylène-maléimide, le N-[4-(méthylène-citraconimido)-phényl]-méthylène-maléimide, et les mélanges de ces composés.

L'agent anti-réversion peut également être un sel d'hexaméthylène 1,6-bisthiosulfate. Il peut s'agir par exemple d'un sel d'hexaméthylène 1,6-bisthiosulfate choisi dans le groupe constitué par l'hexaméthylène 1,6-bisthiosulfate de sodium, l'hexaméthylène 1,6-bisthiosulfate de potassium, le l'hexaméthylène 1,6-bisthiosulfate de calcium et leurs mélanges.

De tels composés sont disponibles dans le commerce, par exemple l'hexaméthylène 1,6-bisthiosulfate de sodium « HTSNa » de la société Flexsys.

Lorsque l'agent anti-réversion est utilisé, le taux d'agent anti-réversion est compris dans un domaine allant de 0,5 à 3 pce, de préférence de 0,5 à 2,5 pce, de préférence encore de 1 à 2 pce.

### II-5 Additifs divers

La composition de caoutchouc selon l'invention peut comporter également tout ou partie des additifs usuels habituellement utilisés dans les compositions d'élastomères pour pneumatique, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, les plastifiants éthers, les plastifiants esters (par exemple les trioléates de glycérol), des charges autres que celles précitées, par exemple des charges lamellaires, des résines plastifiantes hydrocarbonées présentant une haute Tg, de préférence supérieure à 30°C, telles que décrites par exemple dans les demandes WO 2005/087859, WO 2006/061064 et WO 2007/017060, des pigments, des agents de protection tels que cires anti-ozone, anti-ozonants chimiques, anti-oxydants, des agents anti-fatigue, des résines renforçantes (tels que résorcinol), des accepteurs (par exemple résine phénolique novolaque) ou des donneurs de méthylène (par exemple HMT ou H3M) tels que décrits par exemple dans la demande WO 02/10269.

### II-6 Article de caoutchouc fini ou semi-fini et pneumatique

La présente invention a également pour objet un article de caoutchouc fini ou semi-fini comportant une composition selon l'invention.

L'article de caoutchouc fini ou semi-fini peut être par exemple une couche interne d'un pneumatique. Selon l'invention, la couche interne peut être choisie dans le groupe constitué par les nappes carcasse, les nappes sommet, les bourrages-tringle, les pieds sommets, les pieds sommet, les couches de découplage, les gommes de bordure, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

Selon l'invention, l'article de caoutchouc fini ou semi-fini peut comprendre plusieurs éléments de renfort noyés dans la composition de caoutchouc selon l'invention, les éléments de renfort étant agencés côtes à côtes selon une direction principale. L'article de caoutchouc fini ou semi-fini peut être par exemple une nappe carcasse ou une nappe sommet, de préférence une nappe carcasse.

La présente invention a également pour objet un pneumatique qui comprend une composition selon l'invention ou un article de caoutchouc fini ou semi-fini selon l'invention.

La présente invention peut être appliquée à tout type de pneumatique. Le pneumatique selon l'invention peut être destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres. Toutefois la composition selon l'invention est particulièrement bien adaptée aux pneumatiques de grande dimension. Ainsi, de manière avantageuse, le pneumatique selon l'invention est un pneumatique pour les véhicules agricoles.

### II-7 Préparation des compositions de caoutchouc

Pour les compositions comprenant un système du vulcanisation, les compositions peuvent être fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de vulcanisation ; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une couche interne ou une bande de roulement par exemple. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Pour les compositions comprenant un système de réticulation au peroxyde, l'homme du métier sait adapter les étapes du procédé ci-dessus, notamment température de mélangeage.

### III- EXEMPLES

### III-1 Mesures et test utilisés

### Essais de traction

Ces essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% et à 100% d'allongement noté MAS10 et MAS100 respectivement, sur des échantillons cuits 25 minutes à 150°C ou 90 minutes à 160°C.

Les résultats sont exprimés en base 100, la valeur 100 étant attribuée au témoin. Un résultat supérieur à 100, indique que la composition de l'exemple considéré présente une plus forte rigidité.

Ont également été mesurés les contraintes à la rupture (en MPa) et les allongements à la rupture (AR en %), à 23°C ± 2°C, selon la norme NF T 46-002, sur des échantillons crus ou sur des échantillons cuits 25 minutes à 150°C ou 90 minutes à 160°C. L'énergie rupture est égale au produit de l'allongement rupture par la contrainte rupture.

### Spectroscopie proche infrarouge (NIR)

La microstructure des élastomères est caractérisée par la technique de spectroscopie proche infrarouge (NIR). La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### III-2 Préparation des compositions

On procède pour les essais qui suivent de la manière suivante : on introduit dans un mélangeur à palettes (taux de remplissage final : environ 70% en volume), dont la température initiale de cuve est d'environ 90 °C, successivement, l'élastomère diénique, la charge renforçante ainsi que les divers autres ingrédients dont l'agent anti-réversion à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore le soufre et l'accélérateur type sulfénamide, sur un mélangeur (homo-finisseur) à 40 °C, en mélangeant le tout (phase productive) dans un outil à cylindre pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

Une partie des échantillons a été analysée à l'état cru. D'autres échantillons ont été cuits pendant 25 minutes à 150°C ou 90 minutes à 160°C dans une presse à cloche, et ont été analysé après avoir été refroidit 24 heures à température ambiante.

### III-3 Test de caoutchouterie

Les exemples présentés dans le Tableau 1 ont pour objet de comparer les différentes propriétés de compositions conformes à l'invention (C1 et C2) à des compositions témoins (T1 à T6). Les témoins T1, T2 et T3 diffèrent des compositions conformes à la présente invention par la nature du copolymère butadiène-styrène utilisé. Les témoins T4, T5 et T6 diffèrent des compositions conformes à la présente invention par la nature du noir de carbone utilisé. Les résultats sont exprimés en bases 100 par rapport au témoin T1.

**Tableau 1**

| | **T1** | **T2** | **T3** | **T4** | **T5** | **T6** | **C1** | **C2** |
|---|---|---|---|---|---|---|---|---|
| Caoutchouc Naturel | 40 | 40 | 40 | 40 | 40 | 40 | 40 | 40 |
| SBR 1 (a) | 60 | | | | | | | |
| SBR 2 (b) | | 60 | | | | | | |
| SBR 3 (c) | | | 60 | | | | | |
| SBR 4 (d) | | | | 60 | 60 | 60 | 60 | 60 |
| N550 (e) | | | | 50 | | | | |
| N134 (f) | | | | | 50 | | | |
| N234 (g) | | | | | | 50 | | |
| N375 (h) | 50 | 50 | 50 | | | | 50 | 50 |
| Agent anti-réversion 1 (i) | 1 | 1 | 1 | 1 | 1 | 1 | 1 | |
| Agent anti-réversion 2 (j) | | | | | | | | 1 |
| Plastifiant liquide (k) | 2 | 2 | 2 | 2 | 2 | 2 | 2 | 2 |
| Résine tackifiante (I) | 5 | 5 | 5 | 5 | 5 | 5 | 5 | 5 |
| Oxyde de zinc | 3 | 3 | 3 | 3 | 3 | 3 | 3 | 3 |
| Acide stéarique (m) | 1.5 | 1.5 | 1.5 | 1.5 | 1.5 | 1.5 | 1.5 | 1.5 |
| 6PPD (n) | 1.5 | 1.5 | 1.5 | 1.5 | 1.5 | 1.5 | 1.5 | 1.5 |
| TMQ (o) | 1 | 1 | 1 | 1 | 1 | 1 | 1 | 1 |
| Soufre | 2 | 2 | 2 | 2 | 2 | 2 | 2 | 2 |
| Sulfénamide (p) | 0.5 | 0.5 | 0.5 | 0.5 | 0.5 | 0.5 | 0.5 | 0.5 |

| **Propriété à cru** | | | | | | | | |
|---|---|---|---|---|---|---|---|---|
| AR% à 23°C | 100 | 105 | 85 | 100 | 120 | 100 | 180 | 120 |
| Energie rupture à 23°C | 100 | 200 | 83 | 150 | 158 | 150 | 358 | 183 |

| **Propriété après cuisson (25 minutes à 150°C)** | | | | | | | | |
|---|---|---|---|---|---|---|---|---|
| MAS10 à 23°C (en MPa) | 100 | 100 | 100 | 106 | 67 | 89 | 111 | 111 |
| MAS100 à 23°C (en MPa) | 100 | 125 | 106 | 113 | 75 | 106 | 125 | 125 |
| AR% à 100°C | 100 | 90 | 100 | 90 | 90 | 90 | 130 | 120 |
| CR à 100°C (MPa) | 100 | 100 | 95 | 95 | 100 | 95 | 137 | 116 |

| **Propriété après cuisson (90 minutes à 160°C)** | | | | | | | | |
|---|---|---|---|---|---|---|---|---|
| MAS10 à 23°C (en MPa) | 100 | 94 | 100 | 100 | 89 | 94 | 111 | 111 |
| MAS100 à 23°C (en MPa) | 100 | 100 | 100 | 100 | 94 | 112 | 118 | 118 |
| AR% à 100°C | 100 | 95 | 95 | 90 | 90 | 90 | 130 | 110 |
| CR à 100°C (MPa) | 100 | 95 | 95 | 95 | 95 | 95 | 147 | 111 |

| | | | | | | | | |
|---|---|---|---|---|---|---|---|---|
| (a) : SBR 1 : SBR Emulsion de Tg -48°C, % Styrène 23.5, % Vinyl 18, % Trans 71 (b) : SBR 2 : SBR Solution de Tg -27°C, % Styrène 26.5, % Vinyl 58, % Trans 23 (c) : SBR 3 : SBR Solution de Tg -65°C, % Styrène 15.5, % Vinyl 24, % Trans 47 (d) : SBR 4 : SBR Solution de Tg -54°C, % Styrène 27, % Vinyl 6, % Trans 78 (e) : Noir de carbone N550 (selon la norme ASTM D-1765) de BET 39 m²/g et COAN 85 ml/100g (f) : Noir de carbone N134 (selon la norme ASTM D-1765) de BET 140 m²/g et COAN 100 ml/100g (g) : Noir de carbone N234 (selon la norme ASTM D-1765) de BET 120 m²/g et COAN 100 ml/100g (h) : Noir de carbone N375 (selon la norme ASTM D-1765) de BET 95 m²/g et COAN 95 ml/100g (i) : Agent anti-réversion 1 : 1,3-bis-(citraconimidométhyl)-benzène « DP900 » de la société Lanxess (j) Agent anti-réversion 2 : Hexaméthylène 1,6-bisthiosulfate de sodium « HTSNa » de la société Flexsys (k) : Huile MES de la société Exxon Mobil (l) : Résine Octyl Phenol Formaldehyde de la société BASF (m) : Stéarine « Pristerene 4931 » de la société Uniqema (n) : N-1,3-diméthylbutyl-N-phénylparaphénylènediamine « Santoflex 6-PPD » de la société Flexsys (o) : 2,2,4-trimethyl-1,2-dihydroquinoline (TMQ) de la société Lanxess (p) : N-ter-butyl-2-benzothiazyle sulfénamide « Santocure TBBS » de la société Flexsys | | | | | | | | |

Les résultats montrent que les compositions selon l'invention permettent d'améliorer à la fois les propriétés à cru et à cuit, et même de maintenir ces propriétés après sur-cuisson. En revanche, dès que l'on modifie la nature du copolymère butadiène-styrène et/ou du noir de carbone, les propriétés du mélange sont dégradées par rapport aux compositions conformes à l'invention.

## Revendications

1. Composition de caoutchouc à base d'au moins :
- une matrice élastomérique comprenant au plus 70 parties en poids pour cent parties en poids d'élastomère, pce, d'un polyisoprène et au moins 30 pce d'un copolymère de butadiène-styrène,
le copolymère de butadiène-styrène présentant un taux de motifs styrène compris entre 20 et 40% en poids par rapport au poids total du copolymère butadiène-styrène, un taux de motif butadiénique 1-4 trans supérieur à 65% en poids par rapport au poids total des motifs butadiéniques, un taux d'unité vinyl inférieur à 8% en poids par rapport au poids total des motifs butadiéniques, et une température de transition vitreuse comprise entre -60 °C et -35 °C,
- de 35 à 75 pce d'un noir de carbone présentant une surface spécifique BET comprise entre 90 et 100 m²/g et un indice d'absorption COAN compris entre 90 et 100 ml/100g,
- un système de réticulation.

2. Composition de caoutchouc selon la revendication 1, dans laquelle le copolymère de butadiène-styrène présente un taux de motifs styrène compris entre 20 et 30 % en poids par rapport au poids total du copolymère butadiène-styrène.

3. Composition de caoutchouc selon l'une quelconque des revendications 1 à 2, dans laquelle le copolymère de butadiène-styrène présente un taux de motif butadiénique 1-4 trans compris entre 65 et 90% en poids par rapport au poids total des motifs butadiéniques.

4. Composition de caoutchouc selon l'une quelconque des revendications 1 à 3, dans laquelle le copolymère de butadiène-styrène présente un taux d'unité vinyl compris entre 2 et 8% en poids par rapport au poids total des motifs butadiéniques.

5. Composition de caoutchouc selon l'une quelconque des revendications 1 à 4, dans laquelle le copolymère de butadiène-styrène présente une température de transition vitreuse comprise entre -60 °C et -40 °C.

6. Composition de caoutchouc selon l'une quelconque des revendications 1 à 5, dans laquelle le système de réticulation est un système de vulcanisation à base de soufre moléculaire et/ou d'agent donneur de soufre et/ou de peroxyde.

7. Composition de caoutchouc selon l'une quelconque des revendications 1 à 5, comprenant un système de vulcanisation à base de soufre moléculaire et/ou de donneurs de soufre, et un agent anti-réversion.

8. Composition de caoutchouc selon la revendication 7, dans laquelle l'agent anti-réversion est un dérivé de citraconimide formule (I) 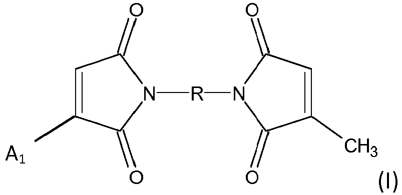 dans laquelle,
R est un radical hydrocarboné comprenant de 1 à 25 atomes de carbone et éventuellement un ou plusieurs hétéroatomes choisis dans le groupe constitué par O, N et S, et
A₁ représente un atome d'hydrogène ou un groupe méthyle.

9. Composition de caoutchouc selon la revendication 8, dans laquelle R est choisi dans le groupe constitué par les alkylènes ayant de 1 à 20 atomes de carbone, les cycloalkylènes ayant de 6 à 24 atomes de carbone, les arylènes ayant de 6 à 18 atomes de carbone et les aralkylènes ayant de 7 à 25 atomes de carbone.

10. Composition de caoutchouc selon la revendication 8 ou 9, dans laquelle A₁ est un groupe méthyle.

11. Composition de caoutchouc selon l'une quelconque des revendication 8 à 10, dans laquelle l'agent anti-réversion est choisi dans le groupe constitué par le 1,3-bis(citraconimidométhyl)benzène le 1,3-bis(citraconimidométhyl)-2-méthylbenzène, le 1,3-bis(citraconimidométhyl)-4-methylbenzène, le 1,3-bis(citraconimidométhyl)-3-méthylbenzène, le 1,3-bis(citraconimidométhyl)-2,4-diméthylbenzène, le 1,3-bis(citraconimidométhyl)-2-methylhexane, le 1,3-bis(citraconimidométhyl)-dodecane, le 1,3-bis(citraconimidométhyl)-decane, le 1,3-bis(citraconimidométhyl)-octane, le 1,3-bis(citraconimidométhyl)-hexane, le 1,3-bis(citraconimidométhyl)-pentane, et les mélanges de ces composés.

12. Composition de caoutchouc selon l'une quelconque des revendication 8 à 9, dans laquelle l'agent anti-réversion est choisi dans le groupe constitué par le N-(citraconimido-m-phényl) maléimide, le N-(citraconimido-p-phényl) maléimide, le N-(citraconimido-o-phényl) maléimide, le N-(3-citraconimido-4,6-diméthyl-phényl) maléimide, le N-(3-citraconimido-4-méthyl-phényl) maléimide, le N-(3-citraconimido-6-méthyl-phényl) maléimide, le N-(3-citraconimido-2-méthyl-phényl) maléimide, le N-(1'-citraconimido-4,4'-méthylène-bi-phényl) maléimide, le N-[2-(méthylène-citraconimido)-phényl]-méthylène-maléimide, le N-[3-(méthylène-citraconimido)-phényl]-méthylène-maléimide, le N-[4-(méthylène-citraconimido)-phényl]-méthylène-maléimide, et les mélanges de ces composés.

13. Composition de caoutchouc selon la revendication 7, dans laquelle l'agent anti-réversion est un sel d'hexaméthylène 1,6-bisthiosulfate.

14. Article de caoutchouc fini ou semi-fini comportant une composition de caoutchouc selon l'une quelconque des revendications 1 à 13.

15. Pneumatique qui comprend une composition définie selon l'une quelconque des revendications 1 à 13 ou un article de caoutchouc fini ou semi-fini selon la revendication 14.

## Patentansprüche

1. Kautschuk Zusammensetzung auf Basis von mindestens:
- einer Elastomermatrix, umfassend höchstens 70 Gewichtsteile pro hundert Gewichtsteile Elastomer, phe, eines Polyisoprens und mindestens 30 phe eines Butadien-Styrol-Copolymers,
wobei das Butadien-Styrol-Copolymer einen Gehalt an Styrol-Einheiten 20 und 40 Gew.-%, bezogen auf das Gesamtgewicht des Butadien-Styrol-Copolymers, einen Gehalt an trans-1,4-Butadien-Einheiten von mehr als 65 Gew.-%, bezogen auf das Gesamtgewicht der Butadien-Einheiten, einen Gehalt an Vinyl-Einheiten von weniger als 8 Gew.-%, bezogen auf das Gesamtgewicht der Butadien-Einheiten, und eine Glasübergangstemperatur zwischen -60 °C und -35 °C aufweist,
- 35 bis 75 phe eines Rußes mit einer spezifischen BET-Oberfläche zwischen 90 und 100 m²/g und einer COAN-Absorptionszahl zwischen 90 und 100 ml/100 g,
- einem Vernetzungssystem.

2. Kautschukzusammensetzung nach Anspruch 1, wobei das Butadien-Styrol-Copolymer einen Gehalt an Styrol-Einheiten zwischen 20 und 30 Gew.-%, bezogen auf das Gesamtgewicht des Butadien-Styrol-Copolymers, aufweist.

3. Kautschukzusammensetzung nach einem der Ansprüche 1 bis 2, wobei das Butadien-Styrol-Copolymer einen Gehalt an trans-1,4-Butadien-Einheiten zwischen 65 und 90 Gew.-%, bezogen auf das Gesamtgewicht der Butadien-Einheiten, aufweist.

4. Kautschukzusammensetzung nach einem der Ansprüche 1 bis 3, wobei das Butadien-Styrol-Copolymer einen Gehalt an Vinyl-Einheiten zwischen 2 und 8 Gew.-%, bezogen auf das Gesamtgewicht der Butadien-Einheiten, aufweist.

5. Kautschukzusammensetzung nach einem der Ansprüche 1 bis 4, wobei das Butadien-Styrol-Copolymer eine Glasübergangstemperatur zwischen -60 °C und -40 °C aufweist.

6. Kautschukzusammensetzung nach einem der Ansprüche 1 bis 5, wobei es sich bei dem Vernetzungssystem um ein Vulkanisationssystem auf Basis von molekularem Schwefel und/oder Schwefeldonator und/oder Peroxid handelt.

7. Kautschukzusammensetzung nach einem der Ansprüche 1 bis 5, umfassend ein Vulkanisationssystem auf Basis von molekularem Schwefel und/oder Schwefeldonatoren und ein Reversionsschutzmittel.

8. Kautschukzusammensetzung nach Anspruch 7, wobei es sich bei dem Reversionsschutzmittel um ein Citraconimidderivat der Formel I handelt: 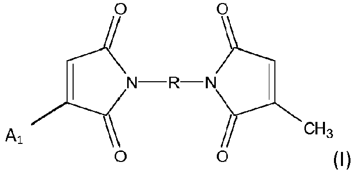 in der
R für einen Kohlenwasserstoffrest mit 1 bis 25 Kohlenstoffatomen und gegebenenfalls einen oder mehreren Heteroatomen aus der Gruppe bestehend aus O, N und S steht und
A₁ für ein Wasserstoffatom oder eine Methylgruppe steht.

9. Kautschukzusammensetzung nach Anspruch 8, wobei R aus der Gruppe bestehend aus Alkylengruppen mit 1 bis 20 Kohlenstoffatomen, Cycloalkylengruppen mit 6 bis 24 Kohlenstoffatomen, Arylengruppen mit 6 bis 18 Kohlenstoffatomen und Aralkylengruppen mit 7 bis 25 Kohlenstoffatomen ausgewählt ist.

10. Kautschukzusammensetzung nach Anspruch 8 oder 9, wobei A₁ für eine Methylgruppe steht.

11. Kautschukzusammensetzung nach einem der Ansprüche 8 bis 10, wobei das Reversionsschutzmittel aus der Gruppe bestehend aus 1,3-Bis(citraconimidomethyl)-benzol, 1,3-Bis(citraconimidomethyl)-2-methylbenzol, 1,3-Bis(citraconimidomethyl)-4-methylbenzol, 1,3-Bis(citraconimidomethyl)-3-methylbenzol, 1,3-Bis(citraconimidomethyl)-2,4-dimethylbenzol, 1,3-Bis(citraconimidomethyl)-2-methylhexan, 1,3-Bis(citraconimidomethyl)dodecan, 1,3-Bis(citraconimidomethyl)decan, 1,3-Bis(citraconimidomethyl)octan, 1,3-Bis(citraconimidomethyl)hexan, 1,3-Bis(citraconimidomethyl)pentan und Mischungen dieser Verbindungen ausgewählt ist.

12. Kautschukzusammensetzung nach einem der Ansprüche 8 bis 9, wobei das Reversionsschutzmittel aus der Gruppe bestehend aus N-(Citraconimido-m-phenyl)-maleimid, N-(Citraconimido-p-phenyl)maleimid, N-(Citraconimido-o-phenyl)maleimid, N-(3-Citraconimido-4,6-dimethylphenyl)maleimid, N-(3-Citraconimido-4-methylphenyl)maleimid, N-(3-Citraconimido-6-methylphenyl)maleimid, N-(3-Citraconimido-2-methylphenyl)maleimid, N-(1'-Citraconimido-4,4'-methylenbiphenyl)maleimid, N-[2-(Methylencitraconimido)phenyl]methylenmaleimid, N-[3-(Methylencitraconimido)phenyl]methylenmaleimid, N-[4-(Methylencitraconimido)phenyl]methylenmaleimid und Mischungen dieser Verbindungen ausgewählt ist.

13. Kautschukzusammensetzung nach Anspruch 7, wobei es sich bei dem Reversionsschutzmittel um ein Hexamethylen-1,6-bisthiosulfat-Salz handelt.

14. Kautschukerzeugnis oder -halbzeug, umfassend eine Kautschukzusammensetzung nach einem der Ansprüche 1 bis 13.

15. Reifen, der eine Zusammensetzung gemäß einem der Ansprüche 1 bis 13 oder ein Kautschukerzeugnis oder - halbzeug nach Anspruch 14 umfasst.

## Claims

1. Rubber composition based on at least:
- an elastomeric matrix comprising at most 70 parts by weight per hundred parts by weight of elastomer, phr, of a polyisoprene and at least 30 phr of a butadiene/styrene copolymer,
the butadiene/styrene copolymer exhibiting a content of styrene units of between 20% and 40% by weight, with respect to the total weight of the butadiene/styrene copolymer, a content of trans-1,4-butadiene units of greater than 65% by weight, with respect to the total weight of the butadiene units, a content of vinyl units of less than 8% by weight, with respect to the total weight of the butadiene units, and a glass transition temperature of between -60°C and -35°C,
- from 35 to 75 phr of a carbon black exhibiting a BET specific surface of between 90 and 100 m²/g and a COAN absorption index of between 90 and 100 ml/100 g,
- a crosslinking system.

2. Rubber composition according to Claim 1, in which the butadiene/styrene copolymer exhibits a content of styrene units of between 20% and 30% by weight, with respect to the total weight of the butadiene/styrene copolymer.

3. Rubber composition according to any one of Claims 1 to 2, in which the butadiene/styrene copolymer exhibits a content of trans-1,4-butadiene units of between 65% and 90% by weight, with respect to the total weight of the butadiene units.

4. Rubber composition according to any one of Claims 1 to 3, in which the butadiene/styrene copolymer exhibits a content of vinyl units of between 2% and 8% by weight, with respect to the total weight of the butadiene units.

5. Rubber composition according to any one of Claims 1 to 4, in which the butadiene/styrene copolymer exhibits a glass transition temperature of between - 60°C and -40°C.

6. Rubber composition according to any one of Claims 1 to 5, in which the crosslinking system is a vulcanization system based on molecular sulfur and/or on sulfur-donating agent and/or on peroxide.

7. Rubber composition according to any one of Claims 1 to 5, comprising a vulcanization system based on molecular sulfur and/or on sulfur donors, and an anti-reversion agent.

8. Rubber composition according to Claim 7, in which the anti-reversion agent is a citraconimide derivative of formula (I): 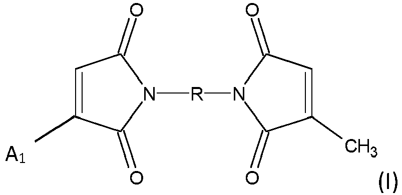 in which:
R is a hydrocarbon radical comprising from 1 to 25 carbon atoms and optionally one or more heteroatoms selected from the group consisting of O, N and S, and
A₁ represents a hydrogen atom or a methyl group.

9. Rubber composition according to Claim 8, in which R is chosen from the group consisting of alkylenes having from 1 to 20 carbon atoms, cycloalkylenes having from 6 to 24 carbon atoms, arylenes having from 6 to 18 carbon atoms and aralkylenes having from 7 to 25 carbon atoms.

10. Rubber composition according to Claim 8 or 9, in which A₁ is a methyl group.

11. Rubber composition according to any one of Claim 8 to 10, in which the anti-reversion agent is selected from the group consisting of 1,3-bis(citraconimidomethyl)benzene, 1,3-bis(citraconimidomethyl)-2-methylbenzene, 1,3-bis(citraconimidomethyl)-4-methylbenzene, 1,3-bis(citraconimidomethyl)-3-methylbenzene, 1,3-bis(citraconimidomethyl)-2,4-dimethylbenzene, 1,3-bis(citraconimidomethyl)-2-methylhexane, 1,3-bis(citraconimidomethyl)dodecane, 1,3-bis(citraconimidomethyl)decane, 1,3-bis(citraconimidomethyl)octane, 1,3-bis(citraconimidomethyl)hexane, 1,3-bis(citraconimidomethyl)pentane, and the mixtures of these compounds.

12. Rubber composition according to any one of Claims 8 to 9, in which the anti-reversion agent is selected from the group consisting of N-(citraconimido-m-phenyl)maleimide, N-(citraconimido-p-phenyl)maleimide, N-(citraconimido-o-phenyl)maleimide, N-(3-citraconimido-4,6-dimethylphenyl)maleimide, N-(3-citraconimido-4-methylphenyl)maleimide, N-(3-citraconimido-6-methylphenyl)maleimide, N-(3-citraconimido-2-methylphenyl)maleimide, N-(1'-citraconimido-4,4'-methylenebiphenyl)maleimide, N-[2-(methylenecitraconimido)phenyl]methylenemaleimide, N-[3-(methylenecitraconimido)phenyl]methylenemaleimide, N-[4-(methylenecitraconimido)phenyl]methylenemaleimide, and the mixtures of these compounds.

13. Rubber composition according to Claim 7, in which the anti-reversion agent is a hexamethylene-1,6-bisthiosulfate salt.

14. Finished or semi-finished rubber article comprising a rubber composition according to any one of Claims 1 to 13.

15. Tyre which comprises a composition defined according to any one of Claims 1 to 13 or a finished or semi-finished rubber article according to Claim 14.
